# EUROPÄISCHE PATENTANMELDUNG

(11) **EP 0 632 679 A1**
(43) Veröffentlichungstag der Anmeldung: **04.01.1995**
(21) Anmeldenummer: 94109318.9
(22) Anmeldetag: 16.06.1994
(51) Int. Cl.: H05B 41/392, H05B 37/02, H05B 39/04, H03G 3/00, H04Q 9/00

(54) **Verfahren und Schaltungsanordnung zur Regelung der Beleuchtung eines Raumes**

(30) Priorität: 22.06.1993 DE 4320682
(71) Anmelder: SIEMENS AKTIENGESELLSCHAFT, D-80333 München (DE)
(72) Erfinder: Zirkl, Siegmar, Dipl.-Ing., D-93051 Regensburg (DE)

(57) **Zusammenfassung**

Moderne Beleuchtungssysteme sind mit Lichtsensoren ausgestattet. Die üblicherweise eingesetzten Lichtsensoren detektieren jedoch nicht die auf einer zu beleuchtenden Fläche (34) meßbare Beleuchtungsstärke (Eₒ), sondern den von dieser Fläche reflektierten Lichtstrom. Durch das neue Verfahren und die Schaltungsanordnung zu seiner Durchführung soll eine selbsttätige Anpassung der gemessenen Werte an die eigentliche Regelgröße, die Beleuchtungsstärke (Eₒ), bewirkt werden.

Bei dem neuen Verfahren wird die von einem Sensormodul (4) über eine Applikationsschaltung (5) an eine Busankopplung (2) übermittelte Meßgröße durch eine als Stellglied eines geschlossenen Regelkreises wirkende Verstärkungsregelung auf den tatsächlichen Istwert verstärkt. Zur Verstärkungsregelung wird ein Widerstandsnetzwerk (9) nach Maßgabe eines von der Busankopplung (2) digital übermittelten Wertes über Analogschalter (24) auf die Rückkopplung (8) eines Operationsverstärkers (7) der Busankopplung (2) aufgeschaltet.

Das Verfahren und die Anordnung zu seiner Durchführung eignen sich insbesondere zur Beleuchtungsregelung in Verbindung mit busfähigen Gebäudeinstallationssystemen.

## Beschreibung

Die Erfindung bezieht sich auf ein Verfahren zur Beleuchtung eines Raumes und eine Schaltungsanordnung zur Durchführung des Verfahrens.

Moderne Beleuchtungssysteme sind mit Lichtsensoren ausgestattet. Derartige Beleuchtungssysteme ermöglichen beispielsweise eine von der aktuellen Tageslichteinstrahlung unabhängige Konstantlichtregelung. Die üblicherweise eingesetzten Lichtsensoren detektieren jedoch nicht die auf einer zu beleuchtenden Fläche meßbare Beleuchtungsstärke, sondern den von dieser Fläche reflektierten Lichtstrom. Inwieweit diese Meßgröße der interessierenden Regelgröße, nämlich der Beleuchtungsstärke in der zu beleuchtenden Fläche proportional ist, hängt von den jeweiligen Stoffkennzahlen der zu beleuchtenden Fläche ab. Das Verhalten eines Stoffes, auf den ein Lichtstrom auftrifft, beschreiben im einzelnen der Reflektionsgrad (ρ), der Absorptionsgrad (α) und der Transmissionsgrad (τ) dieses Stoffes. Hinzu kommt, daß sich die Stoffkennzahlen, beispielsweise einer Schreibtischplatte, dadurch ändern, daß Gegenstände mit anderen Stoffkennzahlen auf der Schreibtischplatte abgestellt werden.

Der Erfindung liegt die Aufgabe zugrunde, ein verfahren zur Beleuchtung eines Raumes sowie eine Schaltungsanordnung zur Durchführung des Verfahrens anzugeben, bei dem eine selbsttätige Anpassung der Meßwerte an die Regelgröße erfolgt. Die Schaltungsanordnung soll busfähig sein und dem Anwender eine leichte Handhabbarkeit bieten.

Die Aufgabe wird durch ein Verfahren nach Anspruch 1 gelöst. Hierbei wirkt die von einem Sensormodul detektierte Strahlung dadurch auf eine Verstärkungsregelung, daß ein gemessener Wert mit einem gespeicherten Sollwert verglichen wird und die so festgestellte Regelabweichung durch einen Eingriff in die Verstärkungsregelung kompensiert wird. Der gemessene Wert ist einem von der zu beleuchtenden Fläche reflektierten Lichtstrom proportional, wohingegen sich der gespeicherte Sollwert auf einen der Beleuchtungsstärke in der zu beleuchtenden Fläche entsprechenden Wert bezieht. Die Eingabe dieser Sollwerte erfolgt während der Eichung der Anlage.

Das Verfahren wird in vorteilhafter Weise mit einer Schaltungsanordnung nach Anspruch 2 durchgeführt. Die Schaltung wird über einen entsprechenden Busankoppler an einen Bus angeschlossen. Die Schaltungsanordnung ist hierdurch busfähig und somit für den Einsatz in modernen Gebäudeinstallationssystemen geeignet. Die Schaltung kann nachträglich an bestehende Systeme angekoppelt werden.

Gemäß Anspruch 3 erfolgt die Verstärkungsregelung des in der Applikationsschaltung befindlichen Operationsverstärkers dadurch, daß ein binär gestaffeltes Widerstandsnetzwerk nach Maßgabe der von der Busankopplung über eine Schnittstelle übermittelten Regelabweichung auf die Rückkopplung des Operationsverstärkers aufgeschaltet wird. Das binär gestaffelte Widerstandsnetzwerk ermöglicht, daß die von einer digitalen Auswertung ermittelte und in digitalisierter Form vorliegende Regelabweichung ohne erneute Wandlung zur Einstellung der analogen Verstärkung eines analogen Signales verwendet wird.

Dadurch, daß die Busankopplung einen Prozessor aufweist, der mit einem beschreibbaren Speicherelement und einem Logikteil versehen und über ein an den Bus anschließbares Programmiergerät bedienbar ist, können alle benötigten Auswertungen in der dem Sensormodul zugeordneten Busankopplung durchgeführt werden. Mittels des an den Bus anschließbaren Programmiergerätes ist eine komfortable Eichung der Anlage möglich. Zusätzlich kann über das Programmiergerät jederzeit, beispielsweise zum Einsatz neuer Lichtquellen oder zur Beleuchtung andersartiger Flächen, eine neue Parametrierung der Anlage vorgenommen werden.

Der dem Lichtmesser der Schaltungsanordnung zugeordnete Signalverstärker bewirkt eine dem Helligkeitsempfinden des menschlichen Auges angepaßte Signalverstärkung. Hierdurch gelingt eine den Bedürfnissen des Benutzers optimal angepaßte Regelung der Beleuchtung.

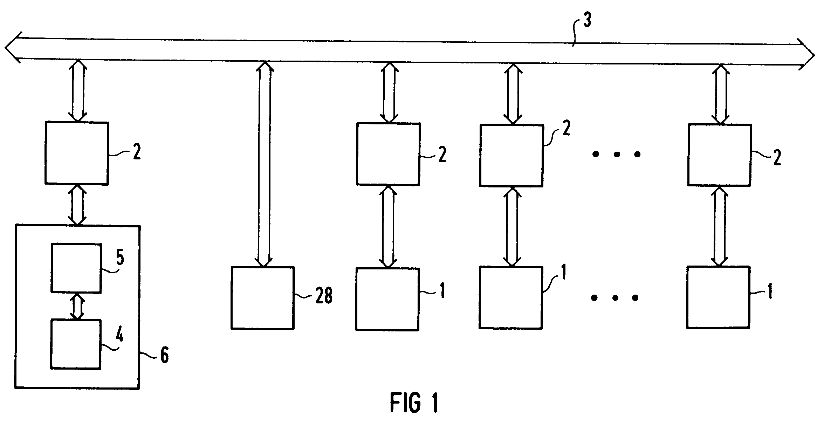

Die Erfindung soll nun anhand eines in der Zeichnung grob schematisch wiedergegebenen Ausführungsbeispiels näher erläutert werden. Es zeigen:
- FIG 1: ein Blockschaltbild der Schaltungsanordnung,
- FIG 2: ein Schaltbild der Schaltungsanordnung und
- FIG 3: eine Prinzipskizze zur Verdeutlichung des Eichvorganges
In dem in FIG 1 gezeigten Blockschaltbild sind an einen Bus 3, beispielsweise eines Gebäudeinstallationssystems, mehrere Teilnehmerstationen 1 über ihre jeweiligen Busankopplungen 2 angeschlossen. Weiter ist ein Programmiergerät 28 mit einer geeigneten Schnittstelle des Busses 3 verbunden. Zusätzlich zu den Teilnehmerstationen 1 ist ebenfalls über eine Busankopplung 2 ein Detektor 6 an den Bus 3 angeschlossen. Der Detektor 6 umfaßt ein Sensormodul 4 und eine Applikationsschaltung 5.

Der Detektor 6 steht über den Bus 3 mit wenigstens einer der Teilnehmerstationen 1 in Wirkverbindung. Zusätzlich können die Teinehmerstationen 1 über den Bus 3 auch untereinander in Verbindung stehen und über das Programmiergerät 28 angesprochen werden.

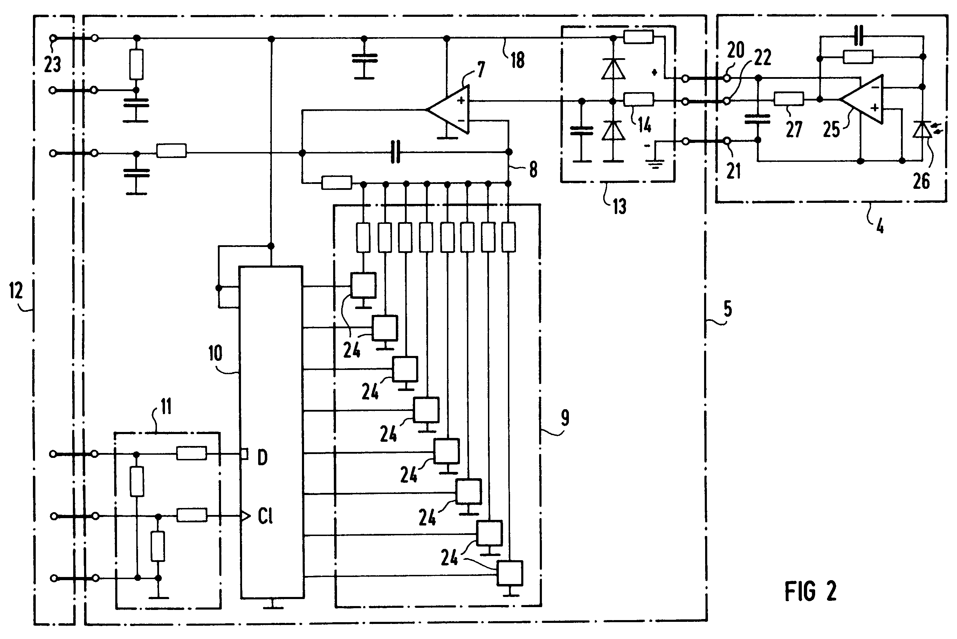

Der genaue Aufbau der Schaltungsanordnung zur Durchführung des Verfahrens ist dem in FIG 2 gezeigten Schaltplan zu entnehmen. Das Sensormodul 4 ist über die Applikationsschaltung 5 mit einer Schnittstelle 12 der Busankopplung 2 verbindbar.

Das Sensormodul 4 umfaßt im einzelnen ein Meßgerät 26, das mit einem invertierenden Eingang eines rückgekoppelten Operationsverstärkers 25 verbunden ist. Der Ausgang des Operationsverstärkers 25 ist über einen Datenausgang 22 des Sensormoduls 4 zugänglich, wobei zwischen den Datenausgang 22 und den Ausgang des Operationsverstärkers 25 ein Schutzwiderstand 27 geschaltet ist. Die Versorgungsanschlüsse des Operationsverstärkers 25 sind über einen Anschluß positiver Polarität 20 und einen Anschluß negativer Polarität 21 außerhalb des Sensormoduls 4 zugänglich.

Kernbaustein der Applikationsschaltung 5 ist ein Operationsverstärker 7 dessen nichtinvertierender Eingang über eine Schutzbeschaltung 13 mit den Anschlüssen 20, 22, 21 des Sensormoduls 4 verbindbar ist. Hierzu ist der nichtinvertierende Eingang des Operationsverstärkers 7 über einen Begrenzungswiderstand 14 der Schutzbeschaltung 13 mit dem Datenausgang 22 verbindbar. Ein Betriebsspannungsanschluß des Operationsverstärkers 7 ist an eine Versorgungszuleitung 18 mit positiver Polarität angeschlossen. Die Versorgungszuleitung 18 ist an ihrem einen Ende an einen Versorgungsanschluß 23 der Schnittstelle 12 anschließbar und an ihrem anderen Ende kann der Anschluß positiver Polarität 20 des Sensormoduls 4 angeschlossen werden. Der Operationsverstärker 7 weist eine Parallelschaltung von einer eine Kapazität und einen Widerstand umfassende Rückkopplung 8 auf. An den Widerstandszweig dieser Rückkopplung 8 ist ein Widerstandsnetzwerk 9 angeschlossen. Das Widerstandsnetzwerk 9 besteht aus einer Parallelschaltung von Widerständen, die so dimensioniert sind, daß jeder Widerstand ungefähr den zweifachen Widerstandswert des nächstkleineren Widerstandes aufweist. Hierdurch ist eine binäre Abstufung der Widerstände gegeben. Das Widerstandsnetzwerk 9 wird von einer Speichereinheit 10 über jeweils mit den Widerständen verbundene Analogschalter 24 angesteuert. Die Speichereinheit 10 ist über eine Ankopplungsschaltung 11 mit der Schnittstelle 12 der Busankopplung 2 verbunden.

Im Folgenden wird die Funktion der in FIG 2 gezeigten Schaltungsanordnung näher erläutert. Das Meßgerät 26 detektiert einen dem von einer zu beleuchtenden Fläche 34 reflektierten Lichtstrom proportionalen Meßwert, der über den Signalverstärker 25 und den Begrenzungswiderstand 27 an den Datenausgang 22 des Sensormoduls 4 gelangt. Dieser Meßwert wird, durch den Operationsverstärker 7 der Applikationsschaltung 5 neuerlich verstärkt, über eine Schnittstelle 12 an die Busankopplung 2 weitergeleitet. Die Hohe der von dem Operationsverstärker 7 vorgenommenen Verstärkung des Meßwertes hängt von der Einstellung der die Verstärkungsregelung beeinflussenden Rückkopplung 8 ab. Hierbei wird über die Schnittstelle 12 ein vom Prozessor 32 der Busankopplung 2 vorgegebener Sollwert über die Ankopplungsschaltung 11 an die Speichereinheit 10 in digitaler Form übermittelt. So wird beispielsweise ein digitales Wort in der Speichereinheit 10 abgelegt. Dieses Wort umfaßt 8 Bytes, wobei jedes Byte jeweils die Stellung, Ein oder Aus des entsprechenden Analogschalters 24 repräsentiert. Hierdurch wird eine dem Wert des Wortes entsprechende Widerstandskombination aus dem Widerstandsnetzwerk 9 ausgewählt und auf die Rückkopplung 8 geschaltet. Dies hat eine dem Wert des Wortes und damit dem vorgegebenen Sollwert proportionale Verstärkungsregelung für den Operationsverstärker 7 zur Folge. Am Ausgang des Operationsverstärkers 7 steht nun ein auf den Sollwert verstärkter Meßwert an. Dieser Sollwert repräsentiert die tatsächlich in der zu beleuchtenden Fläche 34 meßbare Beleuchtungsstärke Eₒ. Diese Größe wird nun über die Schnittstelle 12 an die Busankopplung 2 und wieder an den Bus 3 übermittelt. Eine übergeordnetete Regelung kann nun in Abhängigkeit der tatsächlich vorhandenen Beleuchtungsstärke Eₒ auf weitere Teilnehmerstationen 1, beispielsweise Lichtquellen, einwirken.

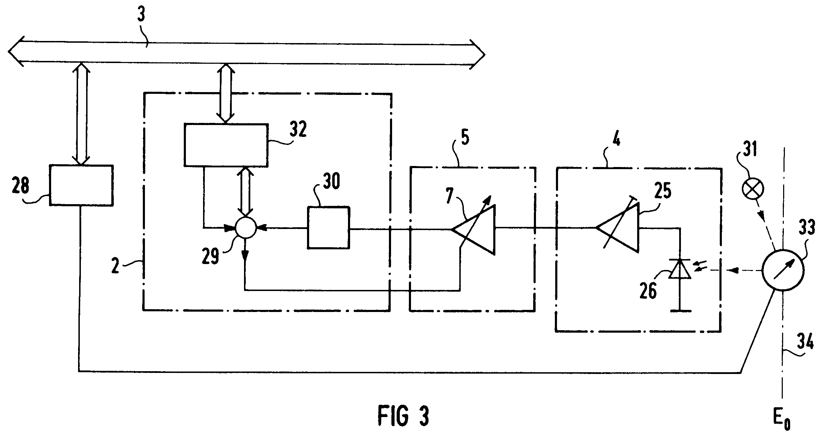

Die zur Verstärkungsregelung benötigten und von dem Prozessor 32 der Busankopplung 2 vorgegebenen Sollwerte werden durch einen bei der Inbetriebnahme der Anlage einmalig durchzuführenden Eichvorgang eingegeben. Dieser Eichvorgang wird anhand der die Schaltungsanordnung stark vereinfacht darstellenden FIG 3 näher erläutert. Eine Lichtquelle 31 sendet einen Lichtstrom aus. Dieser Lichtstrom verursacht in der Ebene 34 eine Beleuchtungsstärke Eₒ. Die Beleuchtungsstärke Eₒ wird mit einem externen Meßgerät 33 gemessen. Der eingestrahlte Lichtstrom wird von der zu beleuchtenden Fläche 34 reflektiert, so daß an dem Meßgerät 26 des Sensormoduls 4 ein dem reflektierten Lichtstrom proportionaler Meßwert auftritt. Dieser Meßwert wird von dem Meßgerät 26 in ein elektrisches Ausgangssignal umgewandelt, das dem Signalverstärker 25 übermittelt wird. Das so verstärkte Meßsignal wird über den Ausgang des Sensormoduls 4 der Applikationsschaltung 5 zugeleitet. Diese umfaßt im wesentlichen Operationsverstärker 7, dessen Ausgangssignal mittelbar an der Busankopplung 2 ansteht. Das von der Applikationsschaltung 5 übermittelte Meßsignal wird von einem A/D-Wandler 30 der Busankopplung 2 in einen digitalen Wert umgewandelt und einem Vergleichselement 29 zugeführt. Ein weiterer Eingang des Vergleichselements 29 steht mit dem Prozessor 32 in Verbindung. Der Prozessor 32 wird über das an den Bus 3 angeschlossene Programmiergerät 28 angesprochen. Der Prozessor 32, beispielsweise ein Mikroprozessor, umfaßt ein beschreibbares Speicherelement und ein Logikteil. Über das Programmiergerät 28 wird die von einem externen Meßgerät 33 gemessene Beleuchtungsstärke eingegeben. Ein Ausgang des Vergleichselementes 29 steht über das in FIG 3 nicht dargestellte Widerstandsnetzwerk 9 mittelbar mit der Verstärkungsregelung des Operationsverstärkers 7 in Wirkverbindung. Über das Programmiergerät 28 kann nun die Verstärkungsregelung des Operationsverstärkers 7 derart beeinflußt werden, daß der am Ausgang des Operationsverstärkers 7 anstehende Analogwert der von dem externen Meßgerät 33 gemessenen Beleuchtungsstärke entspricht. Die vorgenommene Einstellung wird in dem Speicherelement des Prozessors 32 abgespeichert. Dieses Eichverfahren wird für eine das betreffende Beleuchtungsspektrum gut repräsentierende Auswahl von Beleuchtungsstärken durchgeführt. Nach Abschluß dieses Eichverfahrens erfolgt über die Verstärkungsregelung eine selbsttätige Anpassung der vom Meßgerät 26 gemessenen Werte an die tatsächlich in der zu beleuchtenden Fläche 34 meßbare Beleuchtungsstärke Eₒ.

## Patentansprüche

1. Verfahren zur Regelung der Beleuchtung eines Raumes, wobei der von wenigstens einer Lichtquelle abgegebene Lichtstrom von einer zu beleuchtenden Fläche (34) reflektiert und von einem geeigneten Sensormodul (4) detektiert wird und der durch Detektion ermittelte Wert durch eine Verstärkungsregelung jeweils auf einen Wert angeglichen wird, der auf der zu beleuchtenden Fläche 34 meßbar ist, wobei dieser durch die Verstärkungsregelung erzielte Wert in digitalisierter Form einem einem Bus (3), insbesondere eines Gebäudeinstallationssystems, zugeordneten Busankoppler (2) gegebenenfalls übermittelt und in einem beschreibbaren Speicherelement des Busankopplers (2) abgespeichert und zur Regelung zumindest einer an den Bus (3) angeschlossenen Lichtquelle und/oder für Kontrollzwecke zur Verfügung gestellt wird.

2. Schaltungsanordnung zur Durchführung des Verfahrens nach Anspruch 1, bei der ein Sensormodul (4) über eine Applikationsschaltung (5) mit einem entsprechenden Busankoppler (2) verbunden ist, wobei das Sensormodul (4) einen Lichtmesser (26) umfaßt, der mit einem Signalverstärker (25) verbunden ist, dessen Ausgangssignal gegebenenfalls über einen Schutzwiderstand (27) an einen Datenausgang (22) des Sensormoduls (4) geführt ist, wobei die Applikationsschaltung (5) an diesen Datenausgang (22) derart angeschlossen ist, daß dieses Ausgangssignal über eine Schutzbeschaltung (13) auf einen nichtinvertierenden Eingang eines mittels einer Verstärkungsregelung einstellbaren Operationsverstärkers (7) der Applikationsschaltung (5) geführt ist, wobei das am Ausgang des Operationsverstärker (7) analog anstehende korrigierte Meßsignal über eine Stabilisierungsschaltung mit einer Schnittstelle (12) der Busankopplung (2) verbunden ist und hierdurch der Ausgang des Operationsverstärkers (7) über diese Schnittstelle (12) mit einem A/D-Wandler (30) verbunden ist, wobei der Ausgang des A/D-Wandlers (30) mit einem Vergleichselement (29) verbunden ist, an dessen weiteren Eingang ein Speicherelement der Busankopplung (2) angeschlossen ist, wobei eine ggf. am Ausgang des A/D-Wandlers (30) anstehende Regelabweichung mit der Verstärkungsregelung des Operationsverstärkers (7) in Wirkverbindung steht und diese Regetabweichung zusätzlich in einem beschreibbaren Speicherelement der Busankopplung (2) speicherbar ist, wobei die Busankopplung (2) über einen Bus (3) mit weiteren Teilnehmerstationen (1), insbesondere Lichtquellen, in Wirkverbindung steht.

3. Schaltungsanordnung nach Anspruch 2, bei der an den Operationsverstärker (7) eine Rückkopplung (8) angeschlossen ist, die eine Parallelschaltung aus einem kapazitiv geschalteten Zweig und einem Widerstandszweig umfaßt, wobei an den Widerstandszweig ein Widerstandsnetzwerk (9) angeschlossen ist, wobei die parallelen Zweige dieses Widerstandsnetzwerkes (9) Widerstände umfassen, die derart dimensioniert sind, daß der Widerstandswert eines jeden Widerstandes in etwa doppelt so groß ist, wie der des nächstkleineren Widerstandes und wobei jeder Widerstand dieses Widerstandsnetzwerkes (9) mit jeweils einem Analogschalter (24) verbunden ist, wobei die Analogschalter (24) jeweils mit einer über eine entsprechende Ankopplungsschaltung (11) an die Schnittstelle (12) der Busankopplung (2) angeschlossene Speichereinheit (10) verbunden sind.

4. Schaltungsanordnung nach Anspruch 2 und/oder 3, bei der die Busankopplung (2) einen Prozessor aufweist, der mit einem beschreibbaren Speicherelement und einem Logikteil versehen und über ein an den Bus (3) anschließbares Programmiergerät (28) bedienbar ist.

5. Schaltungsanordnung nach einem oder mehreren der vorhergehenden Ansprüche, bei der das Sensormodul (4) einen Lichtmesser (26) umfaßt, der mit einem Signalverstärker (25) für eine dem Helligkeitsempfinden des menschlichen Auges angepaßte Signalverstärkung verbunden ist.
